# EUROPÄISCHE PATENTSCHRIFT

(11) **EP 2 181 217 B1**
(45) Veröffentlichungstag und Bekanntmachung des Hinweises auf die Patenterteilung: **01.07.2015**
(21) Anmeldenummer: 08784386.8
(22) Anmeldetag: 25.07.2008
(51) Int. Cl.: B29C 70/64, B29C 53/74, D04H 3/002, D04H 3/004, D04H 3/045, D04H 3/12, B29C 70/54, B29C 70/22

(54) **VERFAHREN UND VORRICHTUNG ZUR KONTINUIERLICHEN HERSTELLUNG EINER MULTIAXIALEN GELEGEBAHN**
METHOD AND APPARATUS FOR THE CONTINUOUS PRODUCTION OF A MULTIAXIAL LAID SCRIM WEB
PROCÉDÉ ET DISPOSITIF POUR LA FABRICATION EN CONTINU D'UNE BANDE MULTIAXIALE NON TISSÉE

(30) Priorität: 22.08.2007 DE 102007039685
(43) Veröffentlichungstag der Anmeldung: 05.05.2010
(73) Patentinhaber: Fibraforce AG, 5453 Remetschwil (CH)
(72) Erfinder: SCHOLTEN, Friedhelm, 47198 Duisburg (DE); SZUKAT, Klaus, E-03792 Parcent (ES)
(74) Vertreter: Demski, Siegfried
(86) Internationale Anmeldenummer: PCT/DE2008/001212
(87) Internationale Veröffentlichungsnummer: WO 2009/024113

(56) Entgegenhaltungen:
- EP-A- 0 768 167
- WO-A-2008/014784
- DE-A1-102005 000 115
- DE-A1-102006 012 306
- GB-A- 961 716
- JP-A- 2003 221 771
- US-A1- 2005 147 775

## Beschreibung

Die vorliegende Erfindung betrifft ein Verfahren zur kontinuierlichen Herstellung einer multiaxialen Gelegebahn unter Verwendung zumindest eines uniaxialen Geleges, welches zur Herstellung eines im Wesentlichen schlauchförmig ausgebildeten, multiaxialen Geleges um eine Wickeleinrichtung gewickelt wird. Des Weiteren betrifft die Erfindung eine Vorrichtung, die zur Durchführung des genannten Verfahrens geeignet ist.

Der Ausdruck "uniaxiales Gelege" bezeichnet im Sinne der vorliegenden Erfindung ein Fasermaterial aus Fasern geringer Stärke, welche parallel zueinander angeordnet eine gemeinsame Ausrichtung in eine bestimmte Vorzugsrichtung aufweisen. Vorzugsweise sind die einzelnen Fasern des Fasermaterials so nebeneinander angeordnet, dass das uniaxiale Gelege eine Dicke entsprechend der Stärke einer solchen Faser und des Weiteren eine Breite aufweist, die der Anzahl der nebeneinander angeordneten Fasern multipliziert mit deren Einzelstärke entspricht. Die Fasern können dabei beispielsweise Kohlenstofffasern, Glasfasern oder dergleichen sein, je nach Anforderungen an das jeweils mit dem uniaxialen Gelege herzustellende Produkt.

Weiterhin ist unter dem Ausdruck "multiaxiales Gelege" ein Gelege aus Fasermaterial zu verstehen, dass Fasern aufweist, die in unterschiedliche Richtungen ausgerichtet sind. Wie im Fall der vorliegenden Erfindung kann dazu beispielsweise ein uniaxiales Gelege verwendet werden, welches beispielsweise verwebt oder übereinander gelegt und mit Fasern unterschiedlicher Ausrichtung versehen ist. Ein solches multiaxiales Gelege wird meist in Form einer Bahn hergestellt, welche multiaxiale Gelegebahn anschließend auf eine Aufwickeleinrichtung gewickelt oder anderweitig gelagert werden kann,

Solche multiaxialen Gelege bezeichnet man auch als technische Textilien, welche vielfältige Anwendungen finden. Beispielsweise ist es bekannt, multiaxiale Gelege zur Ausbildung von Faserverbundbauteilen, wie beispielsweise kohlenstofffaser- oder glasfaserverstärkter Kunststoffbauteile, zu verwenden. Derartige faserverstärkte Verbundbauteile zeichnen sich insbesondere durch sehr gute Stabilitätseigenschaften bei gleichzeitig geringem Gewicht aus, was insbesondere für die Verwendung solcher Verbundbauteile im Schiffs- und Flugzeugbau vorteilhaft ist. Andererseits können multiaxiale Gelege beispielsweise auch als Hauptbestandteil einer schusssicheren Weste dienen, was zeigt, wie vielfältig das Anwendungsspektrum von multiaxialen Gelegen beziehungsweise technischen Textilien ist.

Zur Herstellung der multiaxialen Gelege sind unterschiedlichste Verfahren aus dem Stand der Technik bekannt, welche sich zum Teil grundsätzlich unterscheiden. Beispielsweise sind Verfahren bekannt, bei dem ein uniaxiales Gelege um eine etwa plattenförmige Wickelebene gewickelt wird, wobei hierbei darauf zu achten ist, dass sich die einzelnen Fasern des uniaxialen Geleges bei der Umwicklung nicht verdrillen oder verwirren, was die Qualität des herzustellenden multiaxialen Geleges negativ beeinträchtigen würde. Zudem kann es beim Abziehen des multiaxialen Geleges von einer solchen Wickelplatte ebenfalls zu Verwirrungen und Verdrillungen kommen, so dass ein derartiges Herstellungsverfahren relativ aufwendig modifiziert werden muss, um multiaxiale Gelege eines gewissen Qualitätsstandards herstellen zu können.

Ein demgegenüber verbessertes Verfahren ist beispielsweise in der Offenlegungsschrift DE 10 2005 000 115 A1 offenbart bei dem zwei Bahnen eines uniaxialen Geleges um eine dritte Bahn eines uniaxiales Gelege gewickelt werden, wobei letztere Fasern aufweist, die sich in Erstreckungsrichtung der herzustellenden multiaxialen Gelegebahn erstrecken und in diese Richtung kontinuierlich weiter gefördert werden. Dadurch wird umgangen, ein herzustellendes multiaxiales Gelege von einer Wickelplatte abziehen zu müssen, sodass die damit verbundenen Nachteile erfolgreich vermieden werden können. Nachteilig bei diesem Verfahren ist jedoch, dass lediglich multiaxiale Geiegebahnen mit wenigstens drei Gelegeschichten hergestellt werden können, sodass relativ viel Material verwendet werden muss, welches zudem die Dicke der herzustellenden multiaxialen Gelegebahn nachteilig vergrößert. Zudem kann es bei der Umwicklung der in Erstreckungsrichtung der multiaxialen Gelegebahn ausgerichteten uniaxiales Gelegebahn, welche auch 0°-Bahn genannt wird, an deren Rändern zu einer Einschnürung durch die uniaxiales Gelege kommen, mit denen die 0°-Bahn umwickelt wird. Diese Einschnürungen werden umso stärker ausgebildet, je größer der Zuführungswinkel zwischen den zugeführten, die 0°-Bahn umwickelnden uniaxialen Gelege und der 0°-Bahn ist, welcher zwischen 0° und 90° ausgewählt werden kann. Somit zeigt sich, dass es auch mit diesem Verfahren nicht möglich ist, eine multiaxiale Gelegebahn von hoher Qualität herzustellen.

Aus der WO 2008/014784 A2 ist ein Verfahren zur kontinuierlichen Herstellung einer multiaxialen Gelegebahn bekannt. Zur Herstellung werden in diesem Fall Spannelemente eingesetzt, die eine Wickelebene definieren, um die die uniaxialen Gelege gewickelt werden. Die Spannelemente werden hierbei nach dem Durchlaufen zweier Walzen von dem Gelege abgeschnitten. Die Spannelemente verlaufen bis zum Walzenpaar parallel zu der Fördereinrichtung.

Die Offenlegungsschrift US 2005/147775 A1 offenbart eine Vorrichtung zum Herstellen eines Geleges, insbesondere für Schlafsäcke, Isoliermaterial und Bettdecken. Hierzu ist eine Vorrichtung vorgesehen, die an der Seite zwei unabhängig voneinander mit unterschiedlichen Geschwindigkeiten betriebene Förderelemente aufweist. Insbesondere ist eine Einführ- und Spreizzone ausgebildet. Zwei Stoffbahnen werden der Vorrichtung zugeführt und jeweils um diese Vorrichtung gedreht. Durch diese Rotation entsteht beim Auseinanderziehen des Materials ein Multiaxiales Gelege.

Die Offenlegungsschrift EP 07681672 A2 beschreibt ein Unidirektionales Gelege aus einem Verstärkungsmaterial für härtbare Faserverbundwerkstoffe. Hier wird ein kontinuierliches Dreh-, Wickel-, und Legeverfahren verwendet, um ein zweilagiges Gelege mit einer Faserorientierung von -45 und +45 Grad herzustellen. Weiterhin werden mittels der zwischen den Gelegen liegenden Haftfäden und einer Verpressung durch einen Druckwalzenpaar beide Lagen unverschiebbar miteinander verbunden.

Die Offenlegungsschrift JP 2003221771 A beschreibt eine Vorrichtung zur Herstellung eines Faserverstärkten Geleges. Hier wird ein fasriges Gelege mit Hilfe eines Uniaxial angeordneten Faserbündels erzeugt, welches parallel um eine Achse wiederholt gedreht wird.

Die Druckschrift GB 961716 offenbart ein Verfahren, zum Formen von verstärkten Litzen, umfassend das Wickeln von Material in eine kontinuierliche Konvolution, wobei Konvolution sich auf eine Form bezieht, welche entsteht, wenn lange Litzen über Lappen angeordnet oder verdreht werden.

Ausgehend von diesem Stand der Technik ist die Aufgabe der vorliegenden Erfindung, ein Verfahren zur kontinuierlichen Herstellung einer multiaxialen Gelegebahn bereit zu stellen, welche mit hoher Produktionsgeschwindigkeit und gleichzeitig, insbesondere im Bezug auf die Ausgestaltung der Ränder in hoher Qualität herstellbar ist.

Diese Aufgabe wird erfindungsgemäß durch ein Verfahren nach Anspruch 1 gelöst, bei dem das zumindest eine uniaxiale Gelege zumindest teilweise flächig auf die Wickeleinrichtung aufgelegt und durch diese kontinuierlich in eine Förderrichtung transportiert wird, wobei das multiaxiale Gelege im Anschluss an die Wickeleinrichtung mittels einer Streckeinrichtung senkrecht zur Förderrichtung gestreckt wird und die Streckeinrichtung aus Spannelementen mit Umlenkrollen bestehen, durch welche die Spannelemente umgelenkt werden. Vorteilhafte Ausgestaltungen des Verfahrens sind in den Unteransprüchen offenbart.

Erfindungsgemäß zeichnet sich das Herstellungsverfahren dadurch aus, dass das wenigstens eine uniaxiales Gelege zumindest teilweise flächig auf die Wickeleinrichtung aufgelegt und durch diese kontinuierlich in eine Förderrichtung transportiert wird. Durch das flächige Auflegen des uniaxialen Geleges auf die Wickeleinrichtung wird sichergestellt, dass es während der Weiterförderung nicht zu Verwirrungen oder Verdrillungen der Fasern des uniaxialen Geleges kommen kann, so dass ein multiaxiales Gelege herstellbar ist, welches höchsten Qualitätsanforderungen entspricht. Selbst bei relativ hohen Fördergeschwindigkeiten, werden die einzelnen Fasern des uniaxialen Geleges in einer möglichst gleichmäßigen Anordnung weiter gefördert. Somit liefert diese Kombination aus kontinuierlicher Förderung und Ausbildung einer sicheren und festen Auflage für das uniaxiale Gelege einen wesentlichen Vorteil gegenüber dem Verfahren aus dem Stand der Technik, so dass ein multiaxiales Gelege, beziehungsweise eine multiaxiale Gelegebahn mit hoher Geschwindigkeit und Qualität herstellbar ist.

Eine vorteilhafte Ausgestaltung der Erfindung sieht vor, dass als Wickeleinrichtung zwei parallel zueinander verlaufend und unter Belastung eines Zwischenraumes voneinander beabstandet angeordnete Transportbänder verwendet werden. Diese Transportbänder stellen die Auflageflächen für das uniaxiale Gelege bereit, wobei die Förderbänder gegenläufig betrieben werden. Diese Förderbänder sind mit geeigneten Antriebseinrichtungen zu versehen und weisen eine Breite auf, welche etwa der Breite einer herzustellenden multiaxialen Gelegebahn entspricht. Zur weiteren Optimierung des Verfahrens wird die Geschwindigkeit der Förderbänder auf die Zuführgeschwindigkeit für das wenigstens eine uniaxiale Gelege so abgestimmt, dass möglichst keine Zugspannungen während der Herstellung auftreten, welche das Fasermaterial des uniaxialen Geleges negativ beeinträchtigen könnten.

Nach einer weiteren vorteilhaften Ausgestaltung der Erfindung ist vorgesehen, dass das wenigstens eine uniaxiales Gelege der Wickeleinrichtung quer zu der Förderrichtung zugeführt wird. Dabei kann das uniaxiale Gelege unter unterschiedlichsten Richtungen der Wickeleinrichtung zugeführt werden, wobei beispielsweise ein Winkel von 45° oder 60° zwischen der Förderrichtung und der Zuführrichtung eingeschlossen sein kann. Welcher Winkel ausgewählt wird, hängt von den Anforderungen an das jeweils herzustellende multiaxiale Gelege und den Herstellungsbedingungen ab. Vorzugsweise werden zwei oder mehrere Bahnen eines uniaxialen Geleges der Wickeleinrichtung zugeführt, wobei ein uniaxiales Gelege auf das eine Transportband und das zweite uniaxiale Gelege auf das andere Transportband aufgelegt wird und diese uniaxialen Gelege durch die gegenläufige Ausgestaltung der Transportbänder in die gleiche Richtung, das heißt in die Erstreckungsrichtung der herzustellenden multiaxialen Gelegebahnen gefördert werden. Dabei sind die uniaxialen Gelege auf geeigneten Bevorratungseinheiten wie beispielsweise Abwickelrollen bevorratet.

Allgemein kann die Umwicklung der Wickeleinrichtung mit den uniaxialen Gelegen auf verschiedene Art und Weise erfolgen. Zum Einen ist es möglich, dass die Bevorratungseinheiten umlaufend um die Wickeleinrichtung, insbesondere um die durch diese definierte Förderrichtung bewegt werden, während die Wickeleinrichtung ortsfest gehalten wird. Eine zweite Möglichkeit besteht darin, dass die Bevorratungseinheiten ortfest gehalten werden und stattdessen die Wickeleinrichtung um eine in Förderrichtung und etwa mittig bezüglich des herzustellenden multiaxialen Geleges angeordnete Achse gedreht wird, so dass auch auf diese Art und Weise das uniaxiale Gelege von den Bevorratungseinheiten abgezogen werden kann. Ferner besteht die Möglichkeit, dass sowohl die Bevorratungseinheiten die Fördereinrichtung umlaufen und gleichzeitig sich die Wickeleinrichtung um die Drehachse dreht, wobei diese Bewegungen exakt auf einander abgestimmt werden müssen. Hierbei kann es erforderlich sein, dass die Bevorratungseinheiten ebenfalls mit einem Antrieb versehen werden, um eine möglichst präzise und spannungsfreie Zuführung des uniaxialen Geleges zur Wickeleinrichtung zu ermöglichen. Welche dieser Ausgestaltungsmöglichkeiten für das erfindungsgemäße Herstellungsverfahren gewählt wird, hängt von den jeweiligen Anforderungen und Gegebenheiten ab.

Es wird weiter vorgeschlagen, dass die Transportbänder wenigstens teilweise aus einem antiadhäsiven Material ausgebildet und/oder mit einer antiadhäsiven Beschichtung versehen werden. Diese Ausgestaltung der Transportbänder bringt den Vorteil, dass das auf diese aufgelegte uniaxiale Gelege keine Verbindung adhäsiver Art mit den Oberflächen der Transportbänder, auf denen es aufliegt, eingeht, wodurch es zu Verwirrungen und Verdrillungen des Fasermaterials kommen könnte, was die Qualität eines herzustellenden multiaxialen Geleges negativ beeinträchtigen würde.

Weiter ist vorgesehen, dass ein mit Klebstoff versehendes Fadengitter zugeführt wird, dass zwischen übereinander liegend angeordneten, uniaxialen Gelegen platziert wird. Dieses Fadengitter kann beispielsweise ebenfalls auf einer als Abwickelrolle ausgebildeten Bevorratungseinheit gelagert und von dieser abgezogen werden, wobei das Fadengitter beispielsweise aus der gleichen Richtung wie das uniaxiale Gelege der Wickeleinrichtung zugeführt werden kann. Jedoch ist es auch denkbar, dass das Fadengitter aus einer anderen Richtung der Wickeleinrichtung zugeführt wird, wobei das Fadengitter durch die Zuführung ebenfalls um die Wickeleinrichtung gewickelt und über dieses ein weiteres uniaxiales Gelege gelegt werden kann, welches so mit einem unter dem Fadengitter angeordneten uniaxialen Gelege verklebbar ist. Die Fäden des Fadengitters sind vorzugsweise mit sehr geringer Stärke ausgestattet, um das herzustellende multiaxiale Gelege nicht unnötig in seiner Dicke zu erhöhen. Des Weiteren kann ein geeigneter Klebstoff verwendet werden, welcher auch als Folie ausgebildet sein kann.

Es wird weiter vorgeschlagen, dass während der Zuführung des uniaxialen Geleges zur Wickeleinrichtung ein Klebstoff auf uniaxiale Gelege aufgebracht wird. Diese Aufbringung eines Klebstoffs ist vorzugsweise alternativ zur Verwendung eines mit Klebstoff versehendes Fadengitter vorgesehen, wobei der Klebstoff auf das uniaxiale Gelege beispielsweise durch eine Stempelwalze, eine Sprüheinrichtung oder ähnliches aufgetragen wird. Auch durch diese Aufbringung eines Klebstoffs werden nachfolgend zwei Schichten eines uniaxialen Geleges miteinander verklebt.

In vorteilhafter Weise wird der Klebstoff thermisch aktiviert, sodass seine Klebeeigenschaften sich erst zu einem bestimmten Zeitpunkt entfalten, um nicht vorzeitig eine Behinderung des Herstellungsverfahrens zu erzeugen, bei dem beispielsweise ein uniaxiales Gelege mit Teilen der Wickeleinrichtung verklebt. Die Verklebung von uniaxialen Gelegen kann also zu einem für das Herstellungsverfahren optimalen Zeitpunkt erfolgen, was die Verfahrensführung vereinfacht.

Weiterhin wird vorgeschlagen, dass die thermische Aktivierung des Klebstoffs durch Kalandrieren erfolgt, wobei als Wärmequelle vorzugsweise eine IR-Heizquelle verwendet wird. Durch das Kalandrieren wird somit zum Einen der Klebstoff aktiviert und zum Anderen die uniaxialen Gelege mit dem dazwischen angeordneten Klebstoff fest verpresst, damit eine gleichmäßige und hochwertige Verbindung zwischen den multiaxialen Gelegen geschaffen wird. Dabei kann ein herkömmlicher Kalander Anwendung finden oder Kalander, in dessen Walzen Heizquellen angeordnet sind, welche in einer relativ einfachen Ausgestaltung als IR-Heizquellen ausgebildet sind, die zur Erwärmung zumindest der Mantelflächen des Kalanders diese mit Strahlung im infraroten Wellenlängenbereich beaufschlagen. Alternativ zu dieser Ausgestaltung des Verfahrens kann vorgesehen sein, dass statt eines Kalanders zwei weitere Transportbänder vorgesehen sind, welche ebenso gegenläufig betrieben werden und zwischen denen das multiaxiale Gelege durchgeführt sowie durch diese zusammen gepresst wird, wobei diese Transportbänder ebenfalls beheizbar sind, um den Klebstoff thermisch zu aktivieren. Diese letztgenannte Ausgestaltung bietet den Vorteil, dass auch nach der Wickeleinrichtung während der Aktivierung des Klebstoffs und der Verbindung der uniaxialen Gelege diese flächig auf Transportbändern aufliegen, sodass auch hier die oben genannten Vorteile bezüglich der gleichmäßigen Verarbeitung der Gelege zu einem multiaxialen Gelege hochwertiger Qualität vorliegen. Die Transportbänder können dabei ebenso wie bereits oben beschrieben, mit einer antiadhäsiven Beschichtung versehen und/oder wenigstens teilweise aus einem antiadhäsiven Material bestehen, damit sowohl die Haft- als auch die Gleitreibung zwischen den Fasern und den Transportbandoberflächen möglichst minimiert werden.

Nach einer weiteren vorteilhaften Ausgestaltung der Erfindung ist vorgesehen, dass eine thermisch aktivierbare Klebefolie parallel zur Förderrichtung in das multiaxiale Gelege eingebracht wird. Diese Klebefolie dient dazu, dass das auf dem oberen Transportband geführte uniaxiale Gelege mit dem an den unteren Laufband geführten uniaxialen Gelegen im Anschluss an die Wickeleinrichtung verbunden werden kann, wobei diese Zuführung der Klebefolie in Förderrichtung zudem in geringem Ausmaß eine eventuell durch Kalandrieren auftretende Zugspannung in Förderrichtung, beziehungsweise Erstreckungsrichtung der herzustellenden multiaxialen Gelegebahn kompensieren kann. Die thermische Aktivierung dieser Klebefolie kann wie vorbeschrieben durch Kalandrieren oder durch die Anordnung von weiteren beheizbaren Transportbändern erfolgen.

Eine weitere vorteilhafte Ausgestaltung der Erfindung sieht vor, dass das multiaxiale Gelege im Anschluss an die Wickeleinrichtung mittels einer Streckeinrichtung quer, vorzugsweise senkrecht zur Förderrichtung gestreckt wird. Dieses ist daher notwendig, da die Wickeleinrichtung eine endliche Dicke aufweist, wodurch eine Zusammenführung des auf einem oberen Transportband aufliegenden uniaxialen Geleges und des auf einem unteren Transportband aufliegenden uniaxialen Geleges im Anschluss an die Wickeleinrichtung erfolgen muss, wobei die Feinheit der Faser beziehungsweise der Gelege bei dieser Zusammenführung dazu führen kann, dass es im Randbereich des multiaxialen Geleges zu Verwerfungen kommt, welche beispielsweise im Anschluss einen Kalander durchlaufen, sodass die dadurch hergestellte multiaxiale Gelegebahn eine relativ niedrige Qualität bezüglich der Ausgestaltung der Ränder aufweist. Zur Umgehung dieses Problems ist die Streckeinrichtung vorgesehen, mit der das multiaxiale Gelege quer zur Förderrichtung gestreckt wird, und zwar so, dass möglichst keine Zugspannungen während der Streckung im multiaxialen Gelege auftreten, welche dieses in seiner Qualität negativ beeinträchtigen könnten. Diese Streckung bietet somit den Vorteil, dass das beispielsweise dem Kalander zugeführte multiaxiale Gelege aus zwei in relativ geringem Abstand zueinander angeordneten uniaxialen Gelegen besteht, sodass es zu keinen Verwerfungen im Randbereich kommen kann und die Kalandrierung effektiv durchgeführt werden kann.

Es ist weiter vorteilhaft, wenn die Streckeinrichtung durch Spannelemente, wie beispielsweise Seile, Bänder oder Drähte ausgebildet wird, die im Wesentlichen parallel zur Förderrichtung und seitlich der Transportbänder verlaufend angeordnet sind und in Förderrichtung mitbewegt werden. Der Abstand dieser Seile, Bänder oder Drähte zueinander kann im Bereich der Wickeleinrichtung so gewählt werden, dass das uniaxiale Gelege, welches um die Wickeleinrichtung gewickelt ist, nicht mit Randbereichen der Transportbänder in Berührung kommt, sondern dort durch die Seile, Bänder oder Drähte mit der gleichen Geschwindigkeit wie die Fördergeschwindigkeit durch die Transportbänder gefördert wird, wobei dazu der Abstand zwischen den Seilen, Bändern oder Drähten geringfügig größer als die Breite der Transportbänder zu wählen ist. Diese Seile, Bänder oder Drähte können zudem aufgeraut sein oder auf irgendeine andere Art und Weise dazu ausgebildet sein, um den Fasern der uniaxialen Gelege, welche in Kontakt mit diesen Seilen, Bändern oder Drähten kommen, etwas Halt zu geben, um ein beispielsweise Verrutschen zu verhindern. Auf der anderen Seite kann ebenso wie im Fall der Transportbänder vorgesehen sein, dass die Seile, Bänder oder Drähte aus einem antiadhäsiven Material bestehen und/oder mit einer antiadhäsiven Beschichtung versehen sind.

Zur Ausführung der Streckung ist vorgesehen, dass der Abstand zwischen den Seilen, Bändern oder Drähten im Anschluss an die Wickeleinrichtung stetig bis auf ein vorgegebenes Maß vergrößert wird. Diese Abstandsvergrößerung kann beispielsweise durch Umlenkrollen erfolgen, die die Seile, Bänder oder Drähte umlenken. Die stetige Abstandsvergrößerung ermöglicht eine Streckung, welche möglichst zugspannungsfrei bezüglich des multiaxialen Geleges erfolgen kann, um die Qualität des multiaxialen Geleges nicht negativ zu beeinträchtigen. Des Weiteren wird der Abstand bis auf ein Maß vergrößert, welches vorzugsweise derart gewählt ist, dass das Gelege zwar in Querrichtung zur Fördereinrichtung gestreckt ist, nicht aber durch die Seile, Bänder oder Drähte in gespanntem Zustand weiter gefördert wird.

Um die Seile, Bänder oder Drähte nach der Streckung aus dem multiaxialen Gelege zu entfernen, kann eine Schneideinrichtung vorgesehen sein, welche die Ränder des multiaxialen Geleges aufschneidet, wonach die Seile, Bänder oder Drähte beispielsweise durch eine weitere Abstandsvergrößerung aus dem multiaxialen Gelege entfernt werden können. Dieser Schneidevorgang kann vor, gleichzeitig mit, oder nach der Kalandrierung durchgeführt werden. Ist letzteres der Fall, so kann vorgesehen sein, dass die Mantelflächen der Kalanderwalzen mit umlaufenden geschlossenen Nuten versehen sind, in denen die Seile, Bänder oder Drähte geführt werden, sodass es im Bereich der Seile, Bänder oder Drähte nicht zu höheren Pressdrücken im multiaxialen Gelege während des Kalandrierens kommt, was ein multiaxiales Gelege mit ungleichmäßiger Verarbeitung erzeugen würde. Vorzugsweise sind die Nuten derart ausgebildet, dass die Weiterförderung des multiaxialen Geleges so erfolgt, dass Zugspannungen in Ersteckungsrichtung der multiaxialen Gelegebahn im Wesentlichen nur im Bereich der Seile, Bänder oder Drähte auftreten und der dazwischen angeordnete Bereich des multiaxialen Geleges im Wesentlichen zugspannungsfrei weiter gefördert wird, was sich ebenfalls positiv auf die Qualität einer entsprechenden multiaxialen Gelegebahn auswirkt. Ferner kann bei der Verwendung von zwei weiteren Transportbändern statt des Kalanders vorgesehen sein, dass diese zur Schaffung des vorbeschriebenen Vorteils ebenfalls mit entsprechenden Vertiefungen in den Transportbandoberflächen versehen sind.

Alternativ zu der vorbeschriebenen Ausgestaltung der Streckeinrichtung kann diese nach einem weiteren Vorschlag durch Formkörper ausgebildet werden, die im Anschluss an die Wickeleinrichtung angeordnet sind und eine dreidimensional geformte Anschluss an die Wickeleinrichtung angeordnet sind und eine dreidimensional geformte Streckoberfläche aufweisen, welche eine Streckung des multiaxialen Geleges möglichst ohne das Auftreten von Zugspannungen im multiaxialen Gelege ermöglicht..Das Material dieser Formkörper kann gemäß dem Vorbeschriebenen wie bei anderen Bestandteilen der Vorrichtung beschrieben, welche in Kontakt mit einem Gelege kommen, variiert werden.

Eine weitere vorteilhafte Ausgestaltung der Erfindung sieht vor, dass das multiaxiale Gelege mit Löchern versehen wird, was beispielsweise mittels einer Stachelwalze oder einem Nadelbalken erfolgen kann. Diese Löcher dienen im späteren dazu, dass beispielsweise bei der Herstellung von faserverstärkten Verbundbauteilen ein Kunststoff oder Harz besser in das multiaxiale Gelege eindringen kann, um dieses möglichst vollständig zu durchsetzen, um somit ein Bauteil mit gleichmäßigen Stabilitätseigenschaften bereit zu stellen. Dabei kann je nach Anforderung ein unterschiedliches Lochmuster in das multiaxiale Gelege eingebracht werden.

Ferner ist nach einer weiteren vorteilhaften Ausgestaltung der Erfindung vorgesehen, dass ein weiteres uniaxiales Gelege oder eine andersartig ausgebildete Materialbahn parallel zur Förderrichtung zugeführt wird. Dieses weitere uniaxiale Gelege oder die Materialbahn kann in Form einer 0°-Bahn zugeführt werden, welche insbesondere dazu geeignet ist, Zugspannungen in Förderrichtung des multiaxialen Geleges aufzufangen, sodass die Qualität des multiaxiale Gelege gleichmäßig hoch ist.

Die erfindungsgemäße Aufgabe wird weiter durch eine Vorrichtung zur kontinuierlichen Herstellung einer multiaxialen Gelegebahn unter Verwendung zumindest eines uniaxialen Geleges gelöst, die wenigstens eine Bevorratungseinheit für das uniaxiale Gelege und eine Wickeleinrichtung aufweist, welche zur Herstellung eines multiaxialen Geleges eine Relativbewegung zueinander ausführen. Weitere vorteilhafte Ausgestaltungen der Vorrichtung sind in den Unteransprüchen 19 bis 31 offenbart.

Erfindungsgemäß weist die Wickeleinrichtung wenigstens ein Transportband auf, auf dem das zumindest eine uniaxiale Gelege wenigstens teilweise flächig aufliegt und eine Streckeinrichtung aufweist, welche aus Spannelementen mit Umlenkrollen besteht.

Diese Ausgestaltung liefert den schon mit Bezug auf das erfindungsgemäße Verfahren genannten Vorteil, dass das uniaxiale Gelege auch mit hoher Transportgeschwindigkeit gefördert werden kann, ohne in seiner gleichmäßigen Formgebung negativ beeinträchtigt zu werden. Dieses ermöglicht die Herstellung einer multiaxialen Gelegebahn mit hoher Produktionsgeschwindigkeit und Qualität.

In vorteilhafter Weise weist das Transportband eine antiadhäsive Beschichtung auf und/oder besteht wenigstens teilweise aus einem antiadhäsiven Material, um einen möglichst reibungsfreien Kontakt zwischen dem uniaxialen Gelege und der Transportbandoberfläche zu gewährleisten.

Weiter wird vorgeschlagen, dass die Wickeleinrichtung zwei Transportbänder aufweist, die parallel zueinander verlaufend und unter Belastung eines Zwischenraumes voneinander beabstandet angeordnet sind. Die Transportbänder werden dabei gegenläufig betrieben, um ein jeweils mit einem solchen Transportband in Kontakt befindliches uniaxiales Gelege gleichmäßig in Förderrichtung zu transportieren. Der Zwischenraum zwischen den Transportbändern kann dazu dienen, dass beispielsweise eine 0°-Bahn oder eine Klebefolie durch diesen hindurch und in das von der Wickeleinrichtung erzeugte multiaxiale Gelege hineingeführt wird.

Zur Verklebung von uniaxialen Gelegen miteinander kann das uniaxiale Gelege beispielsweise mit einem Klebstoff aufweisenden Fadengitter versehen sein, oder es wird ein Klebstoff beispielsweise durch eine Stempelwalze oder eine Spüleinrichtung auf das uniaxiale Gelege aufgetragen, wobei der Klebstoff vorzugsweise thermisch aktivierbar ist. Diese thermische Aktivierung erfolgt vorzugsweise mittels eines Kalanders oder durch zwei weitere beheizbare Transportbänder, wobei die Kalanderwalzen beispielsweise mit infraroter Strahlung beheizt werden.

Des Weiteren wird eine Streckvorrichtung mit zwei im Wesentlichen parallel zueinander und seitlich der Transportbänder verlaufend angeordneten Seilen, Bändern oder Drähten vorgeschlagen, mittels der das multiaxiale Gelege vor dem Kalandrieren oder der Führung durch die beiden zusätzlichen Transportbänder in seiner Breite gestreckt wird, wodurch Verwerfungen im Randbereich des multiaxialen Geleges verhindert werden. Alternativ kann die Streckeinrichtung aber auch Formkörper aufweisen, die eine möglichst spannungsfreie Streckung des multiaxialen Geleges erzeugen. Weiter wird vorgeschlagen, dass die Vorrichtung einer Stachelwalze oder einen Nadelbalken aufweist, mit dem das multiaxiale Gelege gelocht wird, um es beispielsweise bei einer später erfolgenden Verharzung möglichst aufnahmefähig für das Harz auszubilden.

Ferner ist eine Zuführeinrichtung zum Zuführen eines weiteren uniaxialen Geleges oder einer andersartig ausgebildeten Materialbahn vorgesehen, wobei diese Zuführeinrichtung das weitere uniaxiale Gelege oder die andersartige ausgebildete Materialbahn zwischen den Transportbändern der Wickeleinrichtung möglichst berührungsfrei hindurch und anschließend in das durch die Wickeleinrichtung erzeugte multiaxiale Gelege hineinführt.

Weitere Vorteile und Merkmale der vorliegenden Erfindung werden im Folgenden anhand der Figuren beschrieben. Dabei zeigen
- Fig. 1: eine schematische Darstellung eines Ausführungsbeispiels für eine erfindungsgemäße Vorrichtung,
- Fig. 2: eine schematische Darstellung eines weiteren Ausführungsbeispiels für die erfindungsgemäße Vorrichtung und
- Fig. 3: eine schematische Darstellung eines Ausführungsbeispiels für eine erfindungsgemäße Vorrichtung, bei der statt eines Kalanders Transportbänder eingesetzt werden.

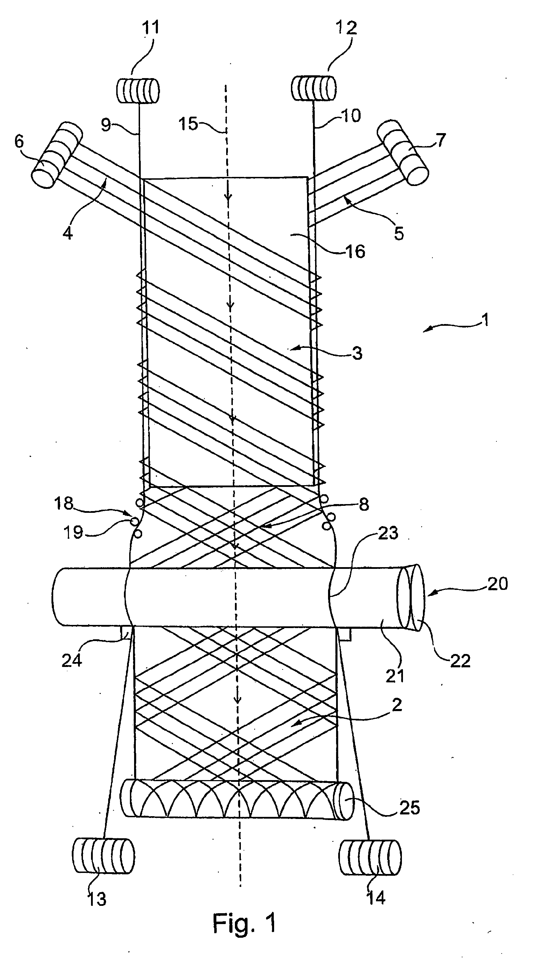

Figur 1 zeigt ein Ausführungsbeispiel für eine erfindungsgemäße Vorrichtung 1 zur kontinuierlichen Herstellung einer multiaxialen Gelegebahn 2. Die Vorrichtung 1 weist eine Wickeleinrichtung 3 auf, um die die uniaxialen Gelege 4 und 5 zur Ausbildung eines multiaxiale Geleges 8 gewickelt werden, wobei die uniaxialen Gelege 4 und 5 zu diesem Zweck von Bevorratungseinheiten 6 beziehungsweise 7 abgezogen und der Wickeleinrichtung 3 zugeführt werden. Seitlich neben der Wickeleinrichtung 3 verlaufen Spannelemente 9 und 10, welche beispielsweise als Drähte ausgebildet sind, die jeweils von Bevorratungen 11 beziehungsweise 12 abgezogen und später auf Wickeleinheiten 13 beziehungsweise 14 aufgewickelt werden. Die Umwicklung der Wickeleinrichtung 3 kann dadurch erfolgen, dass die Bevorratungseinheiten 6 und 7 um die Wickeleinrichtung 3 und somit um die Drehachse 15 umlaufend bewegt werden, während die Wickeleinrichtung 3 ortsfest gehalten wird. Die Umwicklung der Wickeleinrichtung 3 kann aber auch erfolgen, indem die Bevorratungseinheiten 6 und 7 ortsfest gehalten werden, während sich die Wickeleinrichtung 3 um die Drehachse 15 dreht. Des Weiteren ist auch eine Kombination dieser beiden Ausgestaltungen möglich, bei denen sich sowohl die Bevorratungseinheiten 6 und 7 als auch die Wickeleinrichtung 3 um die Drehachse 15 drehen, wobei die Drehrichtungen der Bevorratungseinheiten 6 und 7 gegenläufig zur Drehrichtung der Wickeleinrichtung 3 sind. Je nach Anforderung kann eine dieser drei Möglichkeiten zur Umwicklung der Wickeleinrichtung 3 ausgewählt werden.

Während der Umwicklung der Wickeleinrichtung 3 werden die uniaxialen Gelege 4 und 5 auf zwei Transportbänder 16 und 17 aufgelegt, von denen in Figur 1 nur das Transportband 16 dargestellt ist, wobei sich das Transportband 17 unter dem Transportband 16 befindet und parallel zu diesem angeordnet ist. Mittels dieser Transportbänder 16 und 17 werden die auf den Transportbändern 16 und 17 aufliegenden uniaxialen Gelege 4 beziehungsweise 5 in eine Förderrichtung transportiert, die in Figur 1 durch die Pfeile entlang der Drehachse 15 angedeutet ist. Da die uniaxialen Gelege 4 und 5 an den Seiten der Wickeleinrichtung 3 zusätzlich die Spannelemente 9 und 10 umgeben, werden diese Spannelemente 9 und 10 vorzugsweise mit der gleichen Geschwindigkeit in Richtung der Förderrichtung weiter bewegt, wie auch die Transportbänder 16 und 17 die uniaxialen Gelege 4 und 5 weiter befördern. Durch die Ausgestaltung der Wickeleinrichtung 3 und der Verwendung von seitlich dazu angeordneten Spannelementen 9 und 10 ist es möglich, die uniaxialen Gelege 4 und 5 flächig auf die Wickeleinrichtung 3 aufzulegen und mittels der Spannelemente 9 und 10 zusätzlich einen Kontakt der uniaxialen Gelege 4 und 5 mit den Seitenbereichen der Transportbänder 16 und 17 zu vermeiden, sodass die uniaxialen Gelege 4 und 5 mit hoher Transportgeschwindigkeit in Förderrichtung transportiert werden können, ohne zu verwirren oder zu verdrillen, was die Qualität eines herzustellenden multiaxialen Geleges 8, beziehungsweise einer multiaxialen Gelegebahn 2 negativ beeinflussen könnte. Zur Erhöhung der positiven Auswirkungen bezüglich der Ausgestaltung der Wickeleinrichtung 3 bestehen die Transportbänder 16 und 17 vorzugsweise aus einem antiadhäsiven Material und/oder weisen eine Beschichtung aus einem antiadhäsiven Material auf, wodurch die Reibung zwischen den Fasern der uniaxialen Gelege 4 und 5 und den Oberflächen der Transportbänder 16 und 17 weitestgehend reduziert wird.

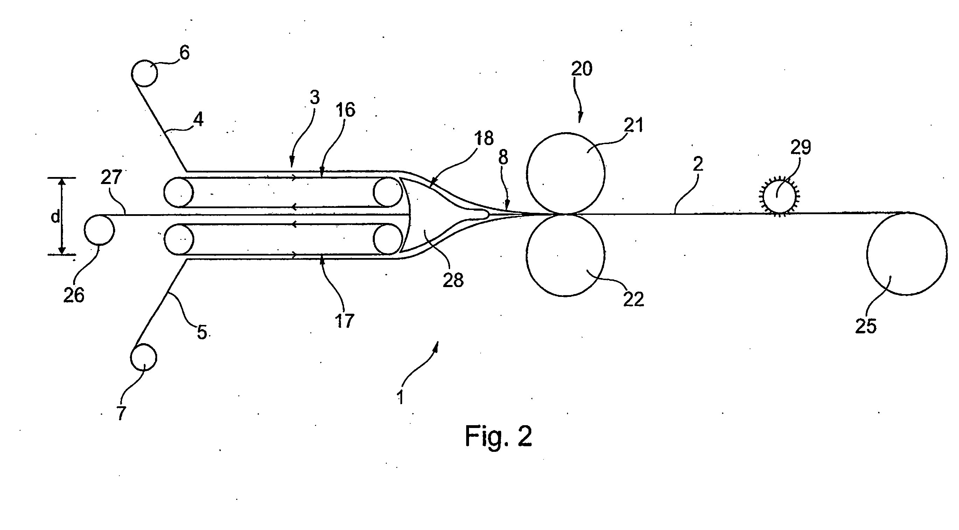

Da die Wickeleinrichtung 3 eine endliche Dicke d (siehe Figur 2) aufweist, kann es im Anschluss an die Wickeleinrichtung 3 bei der Zusammenführung der auf dem Transportband 16 und 17 geführten uniaxialen Gelege, die aus dem uniaxialen Gelegen 4 und 5 gebildet sind, zu Verwerfungen im Randbereich des somit hergestellten multiaxialen Geleges 8 kommen, wobei die Zusammenführung notwendig ist, um das multiaxiale Gelege 8 herzustellen und in einem Kalander 20 zu verfestigen. Um solche Verwerfungen zu vermeiden, ist im Anschluss an die Wickeleinrichtung eine Streckeinrichtung 18 angeordnet, welche in dem gezeigtem Ausführungsbeispiel durch mehrere Umlenkrollen 19 gebildet ist, die die Spannelemente 9 und 10 umlenken, sodass sich der Abstand zwischen den beiden Spannelemente 9 und 10 stetig bis auf ein vorgegebenes Maß vergrößert. Dadurch wird das multiaxiale Gelege 8 gestreckt, wobei diese Streckung vorzugsweise derart erfolgt, dass keine Zugspannungen in dem multiaxialen Gelege 8 erzeugt werden. Somit kann die Verfestigung des multiaxialen Geleges 8 mittels des Kalanders 20 erfolgen, ohne dass das multiaxiale Gelege 8 bei der Zuführung zum Kalander 20 negativ beeinträchtigt wird, wodurch ein multiaxiales Gelege höchster Qualität mit hoher Produktionsgeschwindigkeit herstellbar ist.

Der Kalander 20 weist beheizbare Kalanderwalzen 21 und 22 auf, wobei die Beheizung der Kalanderwalzen 21 und 22 den Zweck hat, einen Klebstoff thermisch zu aktivieren, welcher das auf dem Transportband 16 geführte Gelege mit dem auf dem Transportband 17 geführten Gelege verbindet. Ein solcher Klebstoff kann beispielsweise vor der Umwicklung der Wickeleinrichtung auf eines oder beiden der uniaxialen Gelege 4 und 5 beispielsweise mittels einer Stempelwalze oder Sprüheinrichtung aufgetragen werden, oder es wird an einem oder beiden der uniaxialen Gelege 4 und 5 ein Fadengitter mit Klebstoff, auch Haftfadengitter genannt, angeordnet. Des Weiteren besteht die in Figur 2 angedeutete Möglichkeit, eine Klebefolie in Form einer 0°-Bahn, das heißt in Richtung der Fördereinrichtung verlaufend zwischen den beiden Transportbändern 16 und 17 hindurch und im Anschluss an die Wickeleinrichtung 3 in das multiaxiale Gelege 8 einzuführen. Wesentlich ist jedoch, dass ein thermisch aktivierbarer Klebstoff verwendet wird, damit vor der Kalandrierung nicht die Herstellung beispielsweise durch ein Anhaften eines uniaxialen Geleges 4 oder 5 an einem Transportband 16 oder 17 negativ beeinträchtigt wird. Die Aktivierung erfolgt erst im Kalander 20, was somit eine Vereinfachung des Verfahrensablaufs bedeuten kann.

Die Kalanderwalzen 21 und 22 weisen in Ihren Mantelflächen umlaufende ringförmige Nuten 23 auf, in denen die Spannelemente 9 und 10 geführt werden. Dadurch wird das multiaxiale Gelege 8 nicht im Bereich seiner Ränder, das heißt im Bereich, wo die Spannelemente 9 und 10 angeordnet sind, stärker im Kalander 20 verpresst, als im mittleren Bereich, was eine multiaxiale Gelegebahn 2 mit verschiedenartig verarbeiteten Bereichen zur Folge hätte, was bedeutet, dass eine solche multiaxiale Gelegebahn 2 nicht gleichmäßig qualitativ hochwertig verarbeitet ist. In vorteilhafter Weise sind die Nuten 23 derart ausgebildet, dass die Zugspannungen in Förderrichtung im multiaxialen Gelege 8 im Wesentlichen von den Spannelemente 9 und 10 aufgenommen werden können, sodass der mittig zwischen den Spannelemente 9 und 10 liegende Bereich des multiaxialen Geleges 8 weitestgehend spannungsfrei transportiert wird, was ebenso zur Erhöhung der Qualität einer herzustellenden multiaxialen Gelegebahn 2 beiträgt.

In dem gezeigten Ausführungsbeispiel sind im Anschluss an den Kalander 20 Trenneinrichtungen 24 vorgesehen, welche jeweils randseitig bezüglich des multiaxialen Geleges 8 angeordnet sind und diese Ränder im Anschluss an die Kalandrierung auftrennen, sodass die Spannelemente 9 und 10 aus dem multiaxialen Gelege 8 zur endfertigen Herstellung der multiaxialen Gelegebahn 2 entfernt werden können. Dieses geschieht im gezeigten Beispiel dadurch, dass sich im Anschluss an die Trenneinrichtungen 24 der Abstand zwischen den Spannelemente 9 und 10 stetig bis auf ein vorgegebenes Maß vergrößert, welches in diesem Ausführungsbeispiel durch die Positionierung der Aufwickelrollen 13 und 14 für die Spannelemente 9 beziehungsweise 10 erzeugt wird. Zusätzlich kann in einem der Auftrennung der Ränder nachfolgenden Schritt vorgesehen sein, dass die Spannelemente 9 und 10 von eventuellen Rückständen des Fasermaterials gereinigt werden, um nach einem abgeschlossenen Herstellungsprozess diese Spannelemente 9 und 10 erneut in einem weiteren Verfahrenszyklus zu verwenden. Alternativ zu dieser Rückführung kann auch vorgesehen sein, dass die Spannelemente 9 und 10 in Form von Endlosbändern ausgebildet sind, welche über die Abwickelrollen 11 und 12, Umlenkrollen 19 und Aufwickelrollen 13 und 14 umgelenkt werden.

Wie vorbeschrieben wird somit eine multiaxiale Gelegebahn 2 hergestellt, welche mit hoher Produktionsgeschwindigkeit und Qualität produzierbar ist und im fertiggestellten Zustand auf eine Lagerrolle 25 aufgewickelt wird. Die Lagerrolle 25 kann beim Aufwickeln der multiaxialen Gelegebahn 2 ebenfalls eine Verpressung der multiaxialen Gelegebahn 2 erzeugen, um diese weiter zu verfestigen.

Alle dargestellten Rollen 6, 7, 11, 12, 13, 14 und 19 und Walzen 21 und 22 sowie die Transportbänder 16 und 17 der Wickeleinrichtung 3 können jeweils mit einer Antriebseinrichtung versehen sein, welche beispielsweise über eine Steuereinrichtung steuerbar sind, sodass eine optimale Abstimmung der einzelnen Bewegungen bezüglich des Herstellungsverfahrens erfolgen kann, was insbesondere zur Minimierung von ungewünschten Spannungen in dem uniaxialen Gelegen 4 und 5, dem multiaxialen Gelege 8 und der multiaxialen Gelegebahn 2 dient. Somit wird deutlich, dass mit dem vorliegenden Herstellungsverfahren eine multiaxiale Gelegebahn 2 kontinuierlich und mit hoher Produktionsgeschwindigkeit herstellbar ist, wobei diese multiaxiale Gelegebahn 2 zudem eine im Vergleich zum Stand der Technik hohe Qualität aufweist und relativ kostengünstig herstellbar ist.

Figur 2 zeigt eine schematische Darstellung eines Ausführungsbeispiels für eine erfindungsgemäße Vorrichtung 1 zur kontinuierlichen Herstellung einer multiaxialen Gelegebahn 2. Hier sind beide Transportbänder 16 und 17 zu sehen, auf denen ein uniaxiales Gelege 4 beziehungsweise 5 in Fördereinrichtung transportiert wird, wobei die Gelege 4 und 5 von Bevorratungseinheiten 6 beziehungsweise 7 abgezogen werden. Des Weiteren ist eine Bevorratungseinheit 26 dargestellt, von der thermisch aktivierbare Klebefolie 27 abgezogen und durch den Zwischenraum zwischen den Transportbändern 16 und 17 durchgeführt und dann im Anschluss an die Wickeleinrichtung 3 und die Streckeinrichtung 18 im Kalander 20 zusammen mit den uniaxialen Gelegen 4 und 5 verpresst wird. Anstatt einer Klebefolie kann ebenso vorgesehen sein, dass von der Bevorratungseinheit 26 ein Haftfadengitter, ein weiteres uniaxiales Gelege oder eine andersartig ausgebildete Materialbahn abgezogen wird, welche beispielsweise zur Kompensation von Zugspannungen in dem multiaxialen Gelege 8 in dieses eingefügt werden können. Den an den Transportbändern 16 und 17 eingezeichneten Pfeilen ist zu entnehmen, dass die Transportbänder 16 und 17 gegenläufig betrieben werden, wobei das Transportband 16 im Uhrzeigersinn und das Transportband 17 im Gegenuhrzeigersinn betrieben wird. Der Zwischenraum zwischen den Transportbändern 16 und 17 sollte ausreichend sein, um eine optimale und berührungsfreie Durchführung der Klebefolie 27 durch diesen Zwischenraum zu ermöglichen.

Des Weiteren kann vorgesehen sein, dass die Transportbänder 16 und 17 in dem Zwischenraum mit einem Abschirmelement abgedeckt sind, damit eine Klebefolie 27 nicht in Kontakt mit den Transportbänder 16 und 17 kommen kann. Dies ist insbesondere dann von Vorteil, wenn einer entsprechenden Vorrichtung 1 während des Betriebes funktionsbedingten Vibrationen oder ähnlichen Bewegungen ausgesetzt ist, die beispielweise durch die Drehbewegungen der Wickeleinrichtung 3 erzeugt werden können.

Was insbesondere aus der Figur 2 deutlich wird, ist, dass es durch die endliche Dicke d der Wickeleinrichtung 3 im Anschluss an diese notwendig ist, die uniaxialen Gelege 4 und 5 bis zum Kalander 20 derart zusammen zu führen, dass es im Randbereich des multiaxialen Geleges 8 zu keinen Materialverwerfungen kommt, welche anschließend im Kalander 20 verpresst würden und somit eine multiaxiale Gelegebahn 2 geringer Qualität zur Folge hätten. Zur Verbesserung dieser Zusammenführung ist in Figur 2 alternativ zur Figur 1 eine Streckeinrichtung 18 vorgesehen, welche als randseitig im Anschluss an die Transportbänder 16 und 17 angeordnete Formkörper 28 ausgebildet ist. Diese Formkörper 28 weisen eine dreidimensional.gestaltete Oberfläche auf, welche die Zusammenführung der uniaxialen Gelege 4 und 5 durch eine wie in Figur 1 dargestellte Streckung des multiaxialen Geleges 8 bewirkt, wobei die Formkörper so ausgestaltet sind, dass das Auftreten von Spannungen in dem multiaxialen Gelege 8 weitestgehend vermieden werden. Vorzugsweise sind die Formkörper 28 mit einer antiadhäsiven Beschichtung versehen und/oder bestehen aus antiadhäsiven Material, so dass die Fasern des multiaxialen Geleges 8 möglichst reibungsfrei entlang der dreidimensional ausgestalteten Oberflächen gleiten können, ohne verdrillt oder verwirrt zu werden. Um eine der Figur 1 entsprechende Streckung der multiaxialen Gelegebahn 8 zu erzeugen, ist der rechte Teil des dargestellten Formkörpers 28 entsprechend den in Figur 1 gezeigten unteren Umlenkrollen 19 weiter von dem entsprechenden Teil eines an dem gegenüberliegenden Rand der Wickeleinrichtung 3 positionierten Formkörpers 28 angeordnet, als der in Figur 2 gezeigte linke Teil des Formkörpers 28. Die Formkörper 28 sind dabei jeweils nur randseitig, vorzugsweise nur in seitlicher Verlängerung im Anschluss an die Wickeleinrichtung 3 angeordnet, so dass die Klebefolie 27 unbeeinträchtigt zwischen diesen hindurch und in das multiaxiale Gelege 8 hinein transportiert werden kann.

Das multiaxiale Gelege 8 wird im Anschluss an die Streckeinrichtung 18 wieder mittels eines Kalanders 20 verpresst. Da in dieser in Figur 2 gezeigten Ausführung keine Spannelemente 9 und 10 vorgesehen sind, entfällt die Anordnung von Trenneinrichtungen 24, da keine Spannelemente 9 und 10 aus dem multiaxialen Gelege 8 entfernt werden müssen. Bevor die somit hergestellte multiaxiale Gelegebahn 2 auf die Lagerrolle 25 aufgewickelt wird, wird die multiaxiale Gelegebahn 2 mittels einer Stachelwalze 29 mit Löchern versehen, um beispielsweise das Eindringen von Harz bei einer späteren Verharzung zur Herstellung eines faserverstärkten Verbundbauteils zu verbessern. Alternativ zur Stachelwalze 29 kann zum Lochen der multiaxialen Gelegebahn 2 auch ein Nadelbalken oder ähnliches verwendet werden.

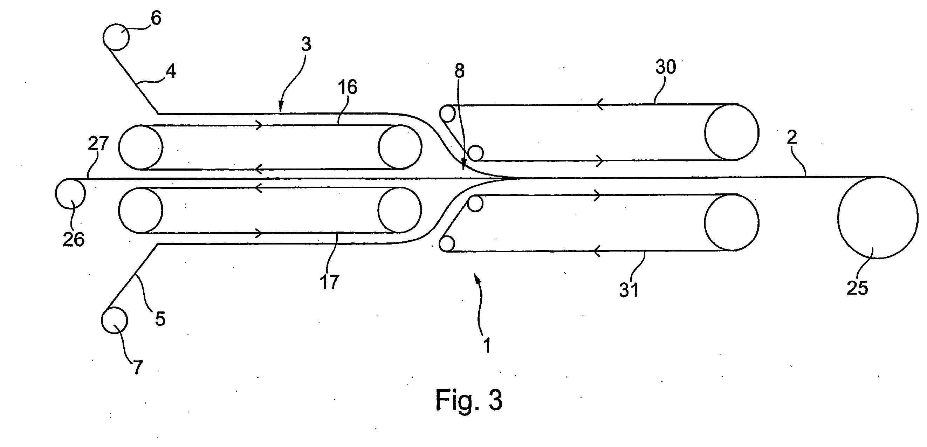

Figur 3 zeigt schematisch eine weitere alternative Ausführung einer Vorrichtung 1. Bei dieser Vorrichtung 1 sind statt des Kalanders 20 zwei weitere Transportbänder 30 und 31 vorgesehen, mittels denen das multiaxiale Gelege 8 verpresst wird, wobei die Transportbänder 30 und 31 beheizbar ausgebildet sein können, damit beispielsweise bei der Zuführung einer Klebefolie 27 zu dem multiaxialen Gelege 8 eine thermische Aktivierung dieser Klebefolie während der Verfestigung zwischen den Transportbändern 30 und 31 erfolgen kann. Wie in Figur 3 dargestellt, wird das Transportband 30 im Gegenuhrzeigersinn und das Transportband 31 im Uhrzeigersinn betrieben, um das multiaxiale Gelege 8 weiterzufördern. Diese Verwendung von zusätzlichen Transportbändern 30 und 31 ermöglicht zum Einen eine Verfahrensführung mit hoher Geschwindigkeit und bietet zum Anderen den Vorteil, dass das multiaxiale Gelege 8 über eine große Fläche gleichmäßig verpresst wird, was im Gegensatz zur Verwendung eines Kalanders 20 vorteilhaft sein kann, bei dem der Bereich der Verpressung im Wesentlichen linienförmig ausgebildet ist. Die Abstände zwischen den Transportbändern 16 und 17 einerseits und den Transportbändern 30 und 31 andererseits kann entsprechend den jeweiligen Gegebenheiten und Anforderungen angepasst werden, wobei insbesondere die Dicke d der Wickeleinrichtung 3 zu berücksichtigen ist, um einen idealen Verfahrensablauf mit optimaler Herstellungsqualität zu ermöglichten. Natürlich kann auch bei der in Figur 3 gezeigten Ausführungsvariante für eine.erfindungsgemäße Vorrichtung 1 vorgesehen sein, dass eine Streckeinrichtung 18 angeordnet ist, welche Verwerfungen im Randbereich des multiaxialen Geleges 8 verhindert.

Aus der vorhergehenden Beschreibung wird deutlich, dass mittels des erfindungsgemäßen Verfahrens und der zugehörigen Vorrichtung 1 ein gegenüber dem Stand der Technik wesentlich verbessertes kontinuierliches Herstellungsverfahren bereit gestellt wird, welches die kontinuierliche Herstellung einer multiaxialen Gelegebahn 2 mit hoher Geschwindigkeit und höchster Qualität ermöglicht, indem Transportbänder 16, 17, 30 und 31 sowie eine Streckeinrichtung 18 Verwendung finden, welche die erfindungswesentlichen Vorteile schaffen.

Die anhand der Figuren beschriebenen Ausführungsbeispiele dienen der Erläuterung und sind nicht beschränkend

### Bezugszeichenliste

- 1: Vorrichtung
- 2: multiaxiale Gelegebahn
- 3: Wickeleinrichtung
- 4: uniaxiales Gelege
- 5: uniaxiales Gelege
- 6: Bevorratungseinheit
- 7: Bevorratungseinheit
- 8: multiaxiales Gelege
- 9: Spannelement
- 10: Spannelement
- 11: Bevorratung
- 12: Bevorratung
- 13: Aufwickeleinheit
- 14: Aufwickeleinheit
- 15: Drehachse
- 16: Transportband
- 17: Transportband
- 18: Streckeinrichtung
- 19: Umlenkrollen
- 20: Kalander
- 21: Kalanderwalze
- 22: Kalanderwalze
- 23: Nut
- 24: Trenneinrichtung
- 25: Lagerrolle
- 26: Bevorratungseinheit
- 27: Klebefolie
- 28: Formkörper
- 29: Stachelwalze
- 30: Transportband
- 31: Transportband
- d: Dicke

## Patentansprüche

1. Verfahren zur kontinuierlichen Herstellung einer multiaxialen Gelegebahn (2) unter Verwendung zumindest eines uniaxialen Geleges (4, 5), welches zur Herstellung eines im Wesentlichen schlauchförmig ausgebildeten, multiaxialen Geleges (8) um eine Wickeleinrichtung (3) gewickelt wird,
**dadurch gekennzeichnet,**
**dass** das zumindest eine uniaxiale Gelege (4, 5) zumindest teilweise flächig auf die Wickeleinrichtung (3) aufgelegt und durch diese kontinuierlich in eine Förderrichtung transportiert wird, wobei das multiaxiale Gelege (8) im Anschluss an die Wickeleinrichtung (3) mittels einer Streckeinrichtung (18) senkrecht zur Förderrichtung gestreckt wird und die Streckeinrichtung aus Spannelementen (9 10) mit Umlenkrollen (19) besteht, durch welches die Spannelemente (9, 10) umgelenkt werden.

2. Verfahren nach Anspruch 1,
**dadurch gekennzeichnet,**
**dass** als Wickeleinrichtung (3) zwei parallel zueinander verlaufend und unter Belassung eines Zwischenraums voneinander beabstandet angeordnete Transportbänder (16, 17) verwendet werden und/oder dass das zumindest eine uniaxiale Gelege (4, 5) der Wickeleinrichtung (3) quer zu der Förderrichtung zugeführt wird.

3. Verfahren nach Anspruch 2,
**dadurch gekennzeichnet,**
**dass** die Transportbänder (16, 17, 30, 31) wenigstens teilweise aus einem antiadhäsiven Material ausgebildet und/oder mit einer antiadhäsiven Beschichtung versehen werden.

4. Verfahren nach einem der vorhergehenden Ansprüche,
**dadurch gekennzeichnet,**
**dass** ein mit Klebstoff versehenes Fadengitter zugeführt wird, das zwischen übereinanderliegend angeordneten uniaxialen Gelegen (4, 5) platziert wird und/oder dass während der Zuführung des uniaxialen Geleges (4, 5) zur Wickeleinrichtung (3) ein Klebstoff auf das uniaxiale Gelege (4, 5) aufgebracht wird.

5. Verfahren nach Anspruch 4,
**dadurch gekennzeichnet,**
**dass** der Klebstoff thermisch aktiviert wird und/oder dass die thermische Aktivierung durch Kalandrieren erfolgt, wobei als Wärmequelle vorzugsweise eine IR-Heizquelle verwendet wird und/oder dass eine thermisch aktivierbare Klebefolie parallel zur Förderrichtung in das multiaxiale Gelege (8) eingebracht wird.

6. Verfahren nach einem der vorgehenden Ansprüche,
**dadurch gekennzeichnet,**
**dass** die Spannelemente (9, 10) seitlich der Transportbänder (16, 17, 30, 31) verlaufend angeordnet und in Förderrichtung mitbewegt werden.

7. Verfahren nach Anspruch 6,
**dadurch gekennzeichnet,**
**dass** der Abstand zwischen den Spannelemente (9, 10) im Anschluss an die Wickeleinrichtung (3) stetig bis auf ein vorgegebenes Maß vergrößert wird und/oder dass die Streckeinrichtung (18) durch Formkörper (28) gebildet wird.

8. Verfahren nach einem der vorhergehenden Ansprüche,
**dadurch gekennzeichnet,**
**dass** die seitlichen Ränder des multiaxialen Geleges (8) mittels einer Trenneinrichtung (24) aufgetrennt werden und/oder dass der Abstand zwischen den Spannelemente (9, 10) nach dem Auftrennen der Ränder des multiaxialen Geleges (8) bis auf ein vorgegebenes Maß weiter vergrößert wird.

9. Verfahren nach einem der vorhergehenden Ansprüche,
**dadurch gekennzeichnet,**
**dass** das multiaxiale Gelege (8) mit Löchern versehen wird und dass ein weiteres uniaxiales Gelege (4, 5) oder eine anders ausgebildete Materialbahn parallel zur Förderrichtung zugeführt wird.

10. Vorrichtung (1) zur kontinuierlichen Herstellung einer multiaxialen Gelegebahn (2) unter Verwendung zumindest eines uniaxialen Geleges (4, 5), aufweisend wenigstens eine Bevorratungseinheit (6, 7) für das uniaxiale Gelege (4, 5) und eine Wickeleinrichtung (3), welche zur Herstellung eines multiaxialen Geleges (8) eine Relativbewegung zueinander ausführen,
**dadurch gekennzeichnet,**
**dass** die Wickeleinrichtung (3) wenigstens ein Transportband (16, 17) aufweist, auf dem das zumindest eine uniaxiale Gelege (4, 5) wenigstens teilweise flächig aufliegt und eine Streckeinrichtung aufweist, welche aus Spannelementen (9, 10) mit Umlenkrollen (19) besteht.

11. Vorrichtung (1) nach Anspruch 10,
**dadurch gekennzeichnet,**
**dass** das Transportband (16,17) wenigstens teilweise aus einem antiadhäsiven Material besteht und/oder eine antiadhäsive Beschichtung aufweist und/oder dass die Wickeleinrichtung (3) zwei Transportbänder (16, 17) aufweist, die parallel zueinander verlaufend und unter Belassung eines Zwischenraums voneinander beabstandet angeordnet sind.

12. Vorrichtung (1) nach einem der Ansprüche 10 oder 11,
**dadurch gekennzeichnet,**
**dass** das uniaxiale Gelege (4, 5) mit einem einen Klebstoff aufweisenden Fadengitter versehen ist und/oder eine Stempelwalze oder eine Sprüheinrichtung aufweist, mittels der ein Klebstoff auf das uniaxiale Gelege (4, 5) auftragbar ist.

13. Vorrichtung (1) nach Anspruch 12,
**dadurch gekennzeichnet,**
**dass** der Klebstoff thermisch aktivierbar ist und/oder einen Kalander (20) aufweist, dessen Walzen (21, 22) vorzugsweise eine IR-Heizquelle aufweisen und/oder eine Zuführeinrichtung für eine Zuführung einer thermisch aktivierbaren Klebefolie, welche in das multiaxiale Gelege (8) einbringbar ist.

14. Vorrichtung (1) nach einem der Ansprüche 10 bis 13,
**gekennzeichnet durch**
eine Stachelwalze (29) oder einen **Nagelbalken.**

15. Vorrichtung (1) nach Anspruch 14,
**dadurch gekennzeichnet,**
**dass** eine Zuführeinrichtung zum Zuführen eines weiteren uniaxialen Geleges (4, 5) oder einer andersartig ausgebildeten Materialbahn vorgesehen ist.

## Claims

1. Method for continuously producing a multiaxial fabric web (2) using at least one uniaxial fabric (4, 5) which is wound around a winding means (3) for producing an essentially tube-like multiaxial fabric (8), **characterized in that** the at least one uniaxial fabric (4, 5) is at least partially flatly placed onto the winding means (3) and continuously transported in a conveying direction by the latter, where following the winding means (3), the multiaxial fabric (8) is stretched by means of a stretching means (18) perpendicularly to the conveying direction and the stretching means consists of clamping means (9, 10) with deflection rollers (19) by which the clamping elements (9, 10) are deflected.

2. Method according to claim 1, **characterized in that** two conveying belts (16, 17) that are arranged to extend in parallel with respect to each other and to be spaced apart leaving a gap (16, 17) are used as the winding means (3) and/or that the at least one uniaxial fabric (4, 5) of the winding means (3) is fed transversely to the conveying direction.

3. Method according to claim 2, **characterized in that** the conveying belts (16, 17, 30, 31) are at least partially made of an anti-adhesive material and/or coated with an anti-adhesive coating.

4. Method according to one of the preceding claims, **characterized in that** a fibre grid provided with an adhesive and placed between uniaxial fabrics (4, 5) disposed one upon the other is fed, and/or that during the feeding of the uniaxial fabric (4, 5) to the winding means (3), an adhesive is applied onto the uniaxial fabric (4, 5).

5. Method according to claim 4, **characterized in that** the adhesive is thermally activated and/or that the thermal activation is accomplished by calendering, where preferably an IR-heat source is used as a source of heat, and/or that a thermally activatable bonding sheet is introduced into the multiaxial fabric (8) in parallel to the conveying direction.

6. Method according to one of the preceding claims, **characterized in that** the clamping elements (9, 10) are disposed so as to extend laterally of the conveying belts (16, 17, 30, 31) and are moved along in the conveying direction.

7. Method according to claim 6, **characterized in that** following the winding means (3), the distance between the clamping elements (9, 10) is continuously enlarged to a predetermined extent, and/or that the stretching means (18) is formed by moulded bodies (28).

8. Method according to one of the preceding claims, **characterized in that** the lateral borders of the multiaxial fabric (8) are undone by means of a separation means (24), and/or that the distance between the clamping elements (9, 10) is further enlarged to a predetermined extent after the borders of the multiaxial fabric (8) have been undone.

9. Method according to one of the preceding claims, **characterized in that** the multiaxial fabric (8) is provided with holes and that a further uniaxial fabric (4, 5) or a differently embodied material web is fed in parallel to the conveying direction.

10. Device (1) for continuously producing a multiaxial fabric web (2) using at least one uniaxial fabric (4, 5), comprising at least one supply unit (6, 7) for the uniaxial fabric (4, 5) and a winding means (3) which perform a motion relative with respect to each other for producing a multiaxial fabric (8), **characterized in that** the winding means (3) comprises at least one conveying belt (16, 17) on which the at least one uniaxial fabric (4, 5) at least partially rests flatly and comprises a stretching means which consists of clamping elements (9, 10) with deflection rollers (19).

11. Device (1) according to claim 10, **characterized in that** the conveying belt (16, 17) at least partially consists of an anti-adhesive material and/or comprises an anti-adhesive coating, and/or that the winding means (3) comprises two conveying belts (16, 17) which are arranged so as to extend in parallel with respect to each other and to be spaced apart leaving a gap.

12. Device (1) according to one of claims 10 or 11, **characterized in that** the uniaxial fabric (4, 5) is provided with a fibre grid comprising an adhesive and/or a stamp roller or a spraying means by means of which an adhesive may be applied onto the uniaxial fabric (4, 5).

13. Device (1) according to claim 12, **characterized in that** the adhesive is thermally activatable and/or comprises a calender (20) whose rollers (21, 22) preferably comprise an IR-heat source and/or a feeding means for feeding a thermally activatable bonding sheet which may be incorporated into the multiaxial fabric (8).

14. Device (1) according to one of claims 10 to 13, **characterized by** a spiked roller (29) or a nail beam.

15. Device (1) according to claim 14, **characterized in that** a feeding means for feeding a further uniaxial fabric (4, 5) or a differently embodied material web is provided.

## Revendications

1. Procédé de production en continu d'une bande multiaxiale de non-tissé (2) au moyen d'au moins un non-tissé (4, 5) uniaxial qui est enroulé autour d'un dispositif d'enroulement (3) pour produire un non-tissé (8) multiaxial sensiblement tubulaire,
**caractérisé en ce qu'**au moins un non-tissé (4, 5) uniaxial est posé au moins partiellement en nappe sur le dispositif d'enroulement (3) qui le transporte en continu dans une direction de transport, le non-tissé (8) multiaxial étant étiré perpendiculairement à la direction de transport après le dispositif d'enroulement (3) au moyen d'un dispositif d'étirage (18) et le dispositif d'étirage se composant d'éléments de tension (9, 10) comportant des rouleaux de renvoi (19) par lesquels les éléments de tension (9, 10) sont déviés.

2. Procédé selon la revendication 1, **caractérisé en ce qu'**on utilise, comme dispositif d'enroulement (3), deux bandes transporteuses (16, 17) s'étendant parallèlement l'une à l'autre et disposées à distance l'une de l'autre avec un espace intermédiaire et/ou **en ce qu'**au moins un non-tissé (4, 5) uniaxial est amené au dispositif d'enroulement (3) transversalement à la direction de transport.

3. Procédé selon la revendication 2, **caractérisé en ce que** les bandes transporteuses (16, 17, 30, 31) sont réalisées au moins partiellement à partir d'un matériau antiadhésif et/ou dotées d'un revêtement antiadhésif.

4. Procédé selon l'une quelconque des revendications précédentes, **caractérisé en ce qu'**une grille tramée dotée de substance adhésive est amenée et placé entre les non-tissés (4, 5) uniaxiaux superposés et/ou **en ce que**, pendant que le non-tissé (4, 5) uniaxial est amené au dispositif d'enroulement (3), une substance adhésive est appliquée sur le non-tissé (4, 5) uniaxial.

5. Procédé selon la revendication 4, **caractérisé en ce que** la substance adhésive est activée thermiquement et/ou **en ce que** l'activation thermique est effectuée par calandrage, une source de chauffage à infrarouge, de préférence, étant utilisée en tant que source de chaleur et/ou **en ce qu'**un film adhésif activable thermiquement est introduit dans le non-tissé (8) multiaxial parallèlement à la direction de transport.

6. Procédé selon l'une quelconque des revendications précédentes, **caractérisé en ce que** les éléments de tension (9, 10) s'étendent sur le côté des bandes transporteuses (16, 17, 30, 31) et sont déplacés conjointement dans une direction de transport.

7. Procédé selon la revendication 6, **caractérisé en ce que** la distance entre les éléments de tension (9, 10) est constamment augmentée jusqu'à un degré prédéfini après le dispositif d'enroulement (3) et/ou **en ce que** le dispositif d'étirage (18) est formé par des corps moulés (28).

8. Procédé selon l'une quelconque des revendications précédentes, **caractérisé en ce que** les bords latéraux du non-tissé (8) multiaxial sont séparés à l'aide d'un dispositif de séparation (24) et/ou **en ce que** la distance entre les éléments de tension (9, 10) est encore augmentée jusqu'à un degré prédéfini après la séparation des bords du non-tissé (8) multiaxial.

9. Procédé selon l'une quelconque des revendications précédentes, **caractérisé en ce que** le non-tissé (8) multiaxial est doté de trous et **en ce qu'**un autre non-tissé (4, 5) uniaxial ou une autre bande de matériau réalisée différemment est amenée parallèlement à la direction de transport.

10. Dispositif (1) de production en continu d'une bande multiaxiale de non-tissé (2) au moyen d'au moins un non-tissé (4, 5) uniaxial, présentant au moins une unité de stockage (6, 7) pour le non-tissé (4, 5) uniaxial et un dispositif d'enroulement (3) qui effectuent un mouvement relatif l'un par rapport à l'autre pour produire un non-tissé (8) multiaxial **caractérisé en ce que** le dispositif d'enroulement (3) présente au moins une bande transporteuse (16, 17) sur laquelle au moins un non-tissé (4, 5) uniaxial est posé au moins partiellement en nappe et au moins un dispositif d'étirage qui est constitué d'éléments de tension (9, 10) comportant des rouleaux de renvoi (19).

11. Dispositif (1) selon la revendication 10, **caractérisé en ce que** la bande transporteuse (16, 17) est constituée au moins partiellement d'un matériau antiadhésif et/ou présente un revêtement antiadhésif et/ou **en ce que** le dispositif d'enroulement (3) présente deux bandes transporteuses (16, 17) s'étendant parallèlement l'une à l'autre et disposées à distance l'une de l'autre avec un espace intermédiaire.

12. Dispositif (1) selon l'une quelconque des revendications 10 ou 11, **caractérisé en ce que** le non-tissé (4, 5) uniaxial est doté d'une grille tramée présentant une substance adhésive et/ou présente un rouleau tampon ou un dispositif de pulvérisation, à l'aide duquel une substance adhésive peut être appliquée sur le non-tissé (4, 5) uniaxial.

13. Dispositif (1) selon la revendication 12, **caractérisé en ce que** la substance adhésive est activable thermiquement et/ou présente une calandre (20) dont les rouleaux (21, 22) présentent, de préférence, une source de chauffage à infrarouge et/ou un dispositif d'amenée pour amener un film adhésif activable thermiquement qui peut être introduit dans le non-tissé (8) multiaxial.

14. Dispositif (1) selon l'une quelconque des revendications 10 à 13, **caractérisé en ce qu'**il présente un rouleau à pointes (29) ou un cylindre hérisson.

15. Dispositif (1) selon la revendication 14 **caractérisé en ce qu'**un dispositif d'amenée est prévu pour amener un autre non-tissé (4, 5) uniaxial ou une bande de matériau réalisée différemment.
